# DEMANDE DE BREVET EUROPEEN

(11) **EP 0 651 948 A1**
(43) Date de publication de la demande: **10.05.1995**
(21) Numéro de dépôt: 93116421.4
(22) Date de dépôt: 11.10.1993
(51) Int. Cl.: A23K 1/04, A23K 1/16, A23K 1/18

(54) **Procédé de préparation en continu de matrice alimentaire solide**

(71) Demandeur: SOCIETE DES PRODUITS NESTLE S.A., CH-1800 Vevey (CH)
(72) Inventeur: Hart, Joseph Richard, F-80800 Corbie (Fouilloy) (FR); Thevenot, Rémi, F-80090 Amiens (FR)
(74) Mandataire: Thomas, Alain

(57) **Abrégé**

L'invention concerne un procédé de préparation en continu de matrice alimentaire solide ayant une teneur en humidité comprise entre 35 et 75% à partir d'un mélange liquide à base de sang, de lipide et d'eau, dans lequel on homogénéise ledit mélange et on le traite thermiquement, et on y ajoute avant ou après l'homogénéisation une source de protéines et/ou des hydrocolloïdes.

## Description

L'invention concerne un procédé de préparation en continu de matrice alimentaire solide ayant une teneur en humidité comprise entre 35 et 75%, à partir d'un mélange liquide à base de sang, de lipide et d'eau, dans lequel on homogénéise ledit mélange et on le traite thermiquement.

On connaît déjà un procédé de préparation pour faire des morceaux. Le brevet EP 265740 concerne un procédé de préparation de morceaux par mélange en milieu aqueux d'une base viande. Ce procédé n'est cependant pas transposable pour le traitement d'un liquide à base de sang et de lipide, car il ne permettrait pas du tout d'obtenir des morceaux. Le brevet FR 2343431 concerne déjà un procédé de préparation d'un aliment à base de sang et de lipide pour préparer des morceaux rappelant le foie. L'inconvénient de ce procédé est qu'on ne peut pas opérer en continu, qu'on utilise un sucre réducteur et qu'on n'obtient pas un gel de couleur claire et de texture ferme susceptible d'être découpé sans formation excessive de fines, mais un aliment friable et cassable.

Le but de la présente invention est donc d'une part de fabriquer des morceaux ayant une cosmétique plus attirante à partir d'un mélange sang-lipide et d'autre part de pouvoir parfaitement bien découper ces morceaux pour les utiliser ensuite dans une terrine ou un plat en sauce par exemple pour animaux domestiques. Ce procédé est mis en oeuvre de manière totalement continue.

L'invention concerne un procédé selon le préambule de la revendication 1, dans lequel on ajoute au mélange sang-lipide-eau avant ou après 1'homogénéisation une source de protéines et/ou des hydrocolloïdes.

Le sang joue le rôle d'émulsifiant et de gélifiant on l'utilise à raison de 30 à 60%, de préférence à raison de 45 à 55%. Par sang, on entend tout produit et sous produit d'origine sanguine comme le sang de porc, de boeuf, de veau, le plasma, l'hémoglobine et le cruor. Tous les pourcentages dans la présente description sont donnés en poids. La teneur en lipides est comprise entre 20 et 50%, de préférence entre 25 et 35%. Par lipide, on entend aussi bien des graisses animales ou végétales, liquides ou solides à la température ambiante, par exemple de la graisse de porc ou de l'huile de soja.

On arrive grâce à l'homogénéisation à un masquage de couleur grâce à la stabilisation par le sang des micelles lipidiques de taille suffisamment petite pour réfléchir une proportion élevée de lumière incidente.

Le traitement thermique de l'émulsion permet de coaguler les protéines du mélange, mais pour obtenir un gel bien ferme et parfaitement découpable, on ajoute selon l'invention une source de protéine et/ou des hydrocolloïdes.

Cette source de protéines est ajoutée à raison de 0,1 à 20% et les hydrocolloïdes à raison de 0,1 à 2%.

Par source de protéine, dans la présente description, on entend des viandes ou sous produits de viande, des protéines végétales, des protéines d'origine microbienne, du poisson ou des abats. Par viande, on entend de la viande de volaille, lapin, bovins ou ovins, de la farine obtenue à partir des carcasses des animaux précités. Par abats, on entend aussi bien des lobes de poumon, que des foies ou des rognons. Par poisson, on entend tout type de poison et la farine de poisson. La fonction de cette addition supplémentaire de protéine est de permettre l'obtention d'un gel plus ferme et plus facilement débitable en forme de cubes. On utilise de préférence comme source de protéine du plasma de sang. Ce plasma est une fraction liquide du sang obtenue après séparation des globules rouges du sang complet après addition d'anticoagulants. On peut aussi utiliser du plasma sous forme de poudre.

Par hydrocolloïdes, on entend tout type de gélifiant ou d'épaississant de préférence du konjac, du guar, du kappacarraghenane, du xanthane, ou leurs mélanges.
L'homogénéisation est faite de manière connue en soi, soit avec des systèmes à haute pression, soit avec un disperseur à hydrocolloïdes, de manière à obtenir une émulsion d'aspect laiteux.

On fait le traitement thermique dans un four tunnel à une température de l'ordre de 100°C pendant 30 sec à 5 minutes.

On peut aussi envisager le traitement thermique dans un affineur-texturateur à une température comprise entre 70 et 110°C pendant environ 30 sec à 5 min. Par affineur-texturateur, par exemple un trigonal de la Société SIEFER, on entend un appareil comportant un stator et un rotor. La fonction de cet appareil est de disperser un liquide dans un solide en réduisant la taille des particules entre le rotor et le stator. Dans la présente invention, l'affineur-texturateur élève la température de l'émulsion et provoque la gélification à chaud du mélange. A la sortie de l'affineur texturateur, le produit gélifié est évacué par un tube de longueur définie et débité sous forme de morceaux de forme choisie régulière par un système approprié. Pour faciliter l'extrusion, on injecte de la vapeur à la sortie de l'affineur texturateur.

Le produit, obtenu selon le procédé de l'invention, est découpé sous la forme désirée et introduit sans besoin d'autre traitement dans des terrines, des viandes microbroyées, ou des plats en sauce pour produits alimentaires, à raison de 5 à 80%. Le produit final est alors stabilisé avant consommation, soit par traitement thermique, par exemple stérilisation, soit par réfrigération ou congélation.

Il est important pour bien montrer le masquage de couleur d'une part de quantifier la couleur rouge du sang tel quel et de l'émulsion préparée selon l'invention et d'autre part de mesurer la dureté du gel obtenu. Ces données seront mentionnées dans la suite de la description en référence aux exemples.

### Exemple 1

On ajoute lentement sous agitation 43 kg de graisse de porc fondu aux microondes et contenant 20 g d'antioxydant (BHT) à un mélange de 27 kg de sang frais auquel on a ajouté 5 kg de plasma en poudre de sang de boeuf, 26 kg d'eau contenant 0,25 kg de nitrite de sodium et 2,5 kg de NaCl.

Le mélange est poursuivi dans des conditions de haut cisaillement pendant 2 min. On effectue ensuite une homogénéisation à une pression de 340 bar à un débit de 30 litres/heure à 45°C. Après le traitement, on mesure l'intensité de la couleur rouge avec un réflectomètre Agtron M63 utilisant un filtre rouge sur l'échelle 0-33. Le résultat est exprimé en % de lumière réfléchie passant à travers le filtre. Plus la valeur est élevée, plus l'intensité du rouge est faible. On trouve dans le cas présent une valeur de 83%, alors que pour le sang elle est proche de 0.

Le mélange est ensuite amené à l'affineur texturateur où il subit un traitement thermique pendant 2 min à une température de 80°C. On mesure à ce moment là la dureté du gel obtenu avec un pénétromètre Stephens LFRA 1000 avec sonde TR5. Pour pénétrer de 11 mm dans la masse, il faut une pression de 620 g/cm². On considère qu'on a un gel de bonne tenue, si on se trouve dans la gamme 400 à 1200 g/cm². On découpe ensuite les morceaux obtenus sous forme de cube à une taille de 13 mm et on introduit 30% de ces cubes dans une terrine qu'on stérilise à environ 30°C.

### Exemple 2

On opère dans les mêmes conditions que dans l'exemple 1 avec 50 kg de sang de boeuf frais, 30 kg d'huile de soja, 0,5 kg de K-carraghenane, 0,5 kg de KCl, 0,5 kg de gomme de guar et 18,5 kg d'eau. On obtient un produit final donnant une valeur de 75% de lumière réfléchie à travers le filtre rouge et une fermeté de gel de 560 g/cm².

### Exemple 3

On opère dans les mêmes conditions que dans l'exemple 1 avec 50 kg de sang de boeuf congelé, 30 kg d'huile de soja, 5 kg de plasma de sang congelé, 0,5 kg de K-carraghenane, 0,5 kg de KCl, 0,5 kg de gomme de guar et 13,5 kg d'eau.

On obtient un produit donnant une valeur de 89%, de lumière réfléchie à travers le filtre rouge.

### Exemple 4

On opère dans les mêmes conditions que dans l'exemple 1 avec 40 kg de sang de boeuf congelé, 20 kg de suif, 20 kg de poisson entier maigre microbroyé, 0,5 g de K-carraghénane, 0,5 kg de KCl, 0,5 kg de gomme de guar et 18,8 kg d'eau, à la différence que l'homogénéisation se fait en une seule étape à la pression atmosphérique dans un disperseur à hydrocolloïde pendant 20 minutes.

On obtient un produit final ayant les mêmes caractéristiques que celui de l'exemple 1.

### Exemple 5

On opère dans les conditions que dans l'exemple 1 avec 50 kg de sang de boeuf congelé, 30 kg de saindoux, 1 kg de plasma en poudre, 0,3 kg de konjac et 18,7 kg d'eau. On obtient un produit final donnant une valeur de 79% de lumière réfléchie à travers le filtre rouge.

## Revendications

1. Procédé de préparation en continu de matrice alimentaire solide ayant une teneur en humidité comprise entre 35 et 75% à partir d'un mélange liquide à base de sang, de lipide et d'eau, dans lequel on homogénéise ledit mélange et on le traite thermiquement, caractérisé en ce qu'on ajoute audit mélange avant ou après l'homogénéisation une source de protéines et/ou des hydrocolloïdes.

2. Procédé selon la revendication 1, caractérisé en ce qu'on mélange entre 20 et 50% de lipide, entre 30 et 60% de sang, entre 0,1 et 20% de source de protéine et/ou entre 0,1 et 2% d'hydrocolloïdes.

3. Procédé selon l'une des revendications 1 ou 2, caractérisé en ce que le traitement thermique est un traitement dans un four tunnel à une température de l'ordre de 100°C pendant 30 sec à 5 minutes.

4. Procédé selon l'une des revendications 1 ou 2, caractérisé en ce que le traitement thermique a lieu dans un affineur-texturateur à une température comprise entre 70 et 110°C pendant environ 30 sec à 5 min.

5. Procédé selon l'une quelconque des revendications 1 à 4, caractérisé en ce qu'on découpe les morceaux formés et on les incorpore dans une terrine à raison de 5 à 80%.

6. Procédé selon l'une des revendications 1 à 4, caractérisé en ce que la source de protéine utilisée est choisi parmi le plasma de sang, le soja, le poisson, les abats et la caséine.

7. Procédé selon l'une des revendications 1 à 4, caractérisé en ce que l'hydrocolloïde utilisé est choisi parmi le konjac, le guar, le kappa-carraghenane, le xanthane et leurs mélanges.
